Europäisches Patentamt

European Patent Office

Office européen des brevets

(11) Veröffentlichungsnummer: **0 231 755**

**A2**

(12) **EUROPÄISCHE PATENTANMELDUNG**

(21) Anmeldenummer: 87100128.5

(51) Int. Cl.4: **H01R 43/28**

(22) Anmeldetag: 08.01.87

(30) Priorität: 30.01.86 DE 3602739

(43) Veröffentlichungstag der Anmeldung:
12.08.87 Patentblatt 87/33

(84) Benannte Vertragsstaaten:
CH DE FR LI NL

(71) Anmelder: **Grote & Hartmann GmbH & Co. KG
Am Kraftwerk 13
D-5600 Wuppertal 21(DE)**

(72) Erfinder: **Reinertz, Rudolf
Rolingswerth 14
D-5600 Wuppertal 2(DE)**

(74) Vertreter: **Patentanwälte Dr. Solf & Zapf
Schlossbleiche 20 Postfach 13 01 13
D-5600 Wuppertal 1(DE)**

(54) Verfahren und Vorrichtng zum Speichern von elektrischen Leitungen.

(57) Die Erfindung betrifft ein Verfahren zum Speichern und Lagern von elektrischen, insbesondere zumindest an einem Ende mit einem elektrischen Verbinder bestückten Leitungen, die im Quertransport aus einem Kabelkonfektionierautomaten befördert werden, wobei die Leitungen von der Quertransportvorrichtung des Kabelkonfektionierautomaten quer zu ihrer Längserstreckung zwischen zwei Transportbändern einer separaten Speichervorrichtung gegeben, nebeneinander in einer Ebene angeordnet und von den Transportbändern eingeklemmt und gehaltert werden, und wobei die Speichervorrichtung mit den geklemmten Leitungen transportiert, ggf. zwischengelagert und an eine Weiterverarbeitungsvorrichtung angesetzt wird und die Leitungen von den Transportbändern aus der Speichervorrichtung befördert werden. Die Erfindung betrifft ferner eine Vorrichtung, die durch zwei endlos in an sich bekannter Weise über Rollen in einer vertikalen Ebene geführte Transportbänder 2,3 gekennzeichnet ist, wovon das Transportband 3 senkrecht fluchtend unter dem Transportband 2 angeordnet ist und der untere Trum 4 des Transportbandes 2 den oberen Trum 5 des Transportbandes 3 berührt.

## Verfahren und Vorrichtung zum Speichern von elektrischen Leitungen

Die Erfindung betrifft ein Verfahren und eine Vorrichtung zum Speichern von insbesondere mit elektrischen Verbindern bestückten, aus einem Kabelkonfektionierautomaten kommenden, abgelängten Leitungsstücken.

Bekannt ist, schrittweise aus einem Kabelkonfektionierautomaten kommende, quer zu ihrer Längsachse transportierte, an den Enden mit elektrischen Verbindern bestückte Leitungen lose und ungeordnet aufzufangen in z. B. einer Schale - (US-PS 3 858 292, DE-OS 3 243 906) oder z. B. in einer Rinne (US-PS 4 089 405). Sollen die Leitungen weiterverarbeitet werden, z. B. Gehäuse mit ihnen bestückt werden, müssen sie von Hand den Auffangvorrichtungen entnommen und von Hand einer Gehäusebestückungsvorrichtung zugeführt werden. Meistens werden die Leitungen noch sortiert zwischengelagert. Die manuellen Tätigkeiten sind kosten-und zeitaufwendig.

Aufgabe der Erfindung ist, ein Verfahren und eine Vorrichtung zu schaffen, mit denen die Handhabung der Leitungen vermieden wird.

Diese Aufgabe wird durch die Merkmale des Hauptanspruchs gelöst. Vorteilhafte Weiterbildungen der Erfindung werden in den Unteransprüchen gekennzeichnet.

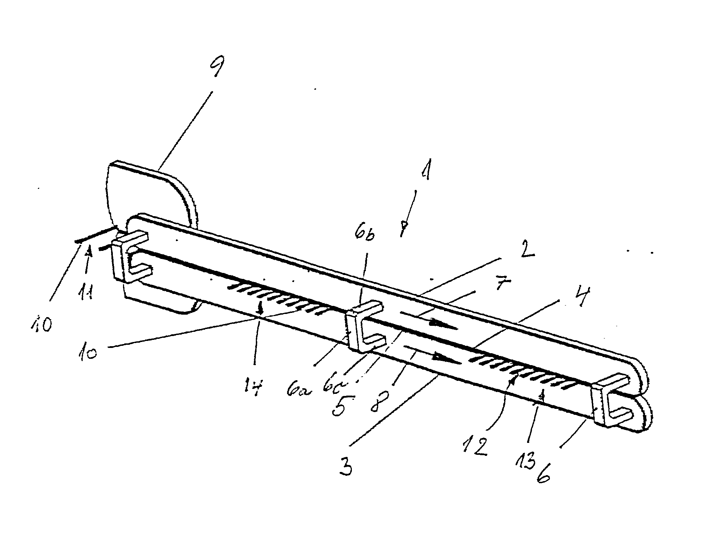

Anhand des in der Zeichnung abgebildeten Beispieles wird die Erfindung im folgenden näher erläutert.

Die Zeichnung zeigt schematisch und perspektivisch eine Speichervorrichtung I, die zwei endlos in an sich bekannter Weise über Rollen (nicht dargestellt) in einer vertikalen Ebene geführte Transportbänder 2,3 aufweist. Das Transportband 3 ist senkrecht fluchtend unter dem Transportband 2 angeordnet, und der untere Trum 4 des Transportbandes 2 berührt den oberen Trum 5 des Transportbandes 3. Die Vorrichtungen der Transportbänder 2,3 werden mit einer Art Klammervorrichung 6 zusammengehalten, wovon mehrere in Längsrichtung der Transportbandeinrichtungen verteilt angeordnet sind. Jede Klammervorrichtung 6 ist zweckmäßigerweise von vorne betrachtet C-förmig ausgebildet und weist den vertikalen Steg 6 a, den oberen horizontalen Steg 6 b und den unteren horizontalen Steg 6 c auf. Der Steg 6 b ist mit der oberen Transportbandeinrichtung und der Steg 6 c mit der unteren Transportbandeinrichtung verbunden.

Die Transportbänder 2,3 weisen Antriebsmittel (nicht dargestellt) auf, die eine Bewegung des Trums 4 und 5 in gleicher Richtung (Pfeilrichtung 7,8) bewirken. Es kann ausreichen, wenn nur ein Transportband 2 oder 3 Antriebsmittel aufweist und das jeweils andere Transportband lediglich von einem Zahnrad-oder Riementrieb oder vom berührenden Trum des angetriebenen Transportbandes mitgenommen wird.

Die Antriebsmittel bestehen vorzugsweise aus Kupplungselementen, z. B. Zahnrädern oder Riementrieben (nicht dargestellt), die z. B. an der Quertransportvorrichtung 9 des Kabelkonfektionierautomaten (nicht dargestellt) dafür vorgesehen sind. Eine solche Quertransportvorrichtung 9 wird beispielsweise in der DE-OS 32 43 906 beschrieben. Entsprechende Antriebsmittel für die erfindungsgemäße Speichervorrichtung sind zweckmäßigerweise auch an der Gehäusebestückungsvorrichtung oder einer anderen Weiterverarbeitungsvorrichtung eingerichtet, an der die erfindungsgemäße Speichervorrichtung angeordnet werden kann (nicht dargestellt).

Die erfindungsgemäße Speichervorrichtung I ist kompakt aufgebaut und kann als solche gehandhabt werden, d.h. sie kann vom Kabelkonfektionierautomaten abkuppelt und mit den gespeicherten Leitungen transportiert werden. Sie ist z. B. seitlich neben und parallel dazu verlaufend an der Quertransportvorrichtung 9 angeordnet und wird von der Quertransportvorrichtung 9 derart angetrieben, daß sie die dort mit einem Rasterabstand II geführten Leitungen übernimmt und vorzugsweise mit einem geringeren Rasterabstand I2 speichert. Dies kann bewirkt werden, wenn der bei jedem Takt zurückgelegte Transportweg der Transportbänder 2,3 kürzer ist als der Transportweg der Transportvorrichtung 9.

Man kann den Antrieb der Transportbänder 2,3 auch so wählen, daß der Rasterabstand I2 einem Kammerabstand eines zu bestückenden Gehäuses entspricht. Es können außerdem Gruppen I3,I4 von Leitungen gebildet werden, die mit einem Abstand voneinander angeordnet sind, der größer ist als der Rasterabstand I2. Die Gruppen I3 und I4 können unterschiedliche Rasterabstände I2 aufweisen. Werden die bestückten Leitungen aus Kabelkonfektionierautomaten, die zwei im Abstand parallel zueinander angeordnete Quertransportvorrichtungen aufweisen, gespeichert, dann kann jeder Quertransportvorrichtung ein Leitungsspeicher I zugeordnet werden. Dabei können die Rasterabstände I2 in beiden Leitungsspeichern I gleich oder unterschiedlich sein. Auch kann der Rasterabstand I2 einer Gruppe z. B. I3 in einem Leitungsspeicher größer oder kleiner als im anderen sein. Es ist vorgesehen, die Antriebsmittel für die Leitungsspeicher so zu wählen, daß sie entsprechend programmgesteuert werden können.

Das Zwischenlagern von Leitungen ist mit einer erfindungsgemäßen Leitungsspeichervorrichtung unproblematisch. Ein Speicher mit Leitungen wird oder zwei Speicher, im Falle, daß zwei Speicher die beiden Enden von Leitungen lagern, werden in Regalen sortiert und geordnet abgelegt und von dort zur Weiterverarbeitung entnommen. Es ist möglich, dies mit automatischen Mitteln zu tun und einer Nachfolgevorrichtung, z. B. einer Gehäusebestückungsvorrichtung, automatisch zuzuführen. Die relativ einfache neue Speichervorrichtung schafft somit ganz neue wirtschaftliche und einfache Wege sowie unerwartete Möglichkeiten der Weiterverarbeitung von Leitungen, die nicht voraussehbar waren.

**Ansprüche**

I. Verfahren zum Speichern und Lagern von elektrischen, insbesondere zumindest an einem Ende mit einem elektrischen Verbinder bestückten Leitungen, die im Quertransport aus einem Kabelkonfektionierautomaten befördert werden, **dadurch gekennzeichnet** , daß die Leitungen von der Quertransportvorrichtung des Kabelkonfektionierautomaten quer zu ihrer Längserstreckung zwischen zwei Transportbändern einer separaten Speichervorrichtung gegeben, nebeneinander in einer Ebene angeordnet und von den Transportbändern eingeklemmt und gehaltert werden, und daß die Speichervorrichtung mit den geklemmten Leitungen transportiert, ggf. zwischengelagert und an eine Weiterverarbeitungsvorrichtung angesetzt wird und die Leitungen von den Transportbändern aus der Speichervorrichtung befördert werden.

2. Verfahren nach Anspruch I, **dadurch gekennzeichnet**, daß die Leitungen untereinander im seitlichen Kontakt zwischen den Transportbändern eingeklemmt und gespeichert werden.

3. Verfahren nach Anspruch I, **dadurch gekennzeichnet**, daß die Leitungen mit einem gleichen bestimmten Rasterabstand eingeklemmt und gespeichert werden.

4. Verfahren nach einem oder mehreren der Ansprüche I bis 3, **dadurch gekennzeichnet** , daß die Leitungen in Gruppen eingeklemmt und gespeichert werden.

5. Verfahren nach einem oder mehreren der Ansprüche I bis 4, **dadurch gekennzeichnet**, daß jede Leitung mit jedem ihrer beiden Enden zwischen Transportbändern je einer Speichervorrichtung eingeklemmt und gespeichert werden.

6. Verfahren nach Anspruch 5, **dadurch gekennzeichnet**, daß die Leitungen in beiden Speichervorrichtungen mit gleichen Rasterabständen eingeklemmt und gespeichert werden.

7. Verfahren nach Anspruch 5, **dadurch gekennzeichnet**, daß die Leitungen in den beiden Speichervorrichtungen mit unterschiedlichen Rasterabständen eingeklemmt und gespeichert werden.

8. Verfahren nach einem oder mehreren der Ansprüche bis 7, **dadurch gekennzeichnet** , daß die Leitungen in gleichen Gruppen eingeklemmt und gespeichert werden.

9. Verfahren nach einem oder mehreren der Ansprüche bis 7, **dadurch gekennzeich net**, daß die Leitungen in unterschiedlichen Gruppen eingeklemmt und gespeichert werden.

I0. Verfahren nach einem oder mehreren der Ansprüche I bis 9, **dadurch gekennzeichnet**, daß die Speichervorrichtung zum Zwischenlagern aufgehängt wird.

II. Verfahren nach einem oder mehreren der Ansprüche I bis 9, **dadurch gekennzeichnet**, daß die Speichervorrichtung zum Zwischenlagern in einem Regel abgestellt oder abgelegt wird.

I2. Verfahren nach einem oder mehreren der Ansprüche I bis II, **dadurch gekennzeichnet**, daß die Speichervorrichtung von einem Automaten ergriffen, von der Quertransportvorrichtung abgekoppelt, in ein Zwischenlager transportiert und dort abgelegt oder aufgestellt oder aufgehängt wird und von einem weiteren Automaten ergriffen und zur Weiterverarbeitungsvorrichtung transportiert und an die Weiterverarbeitungsvorrichtung angekoppelt wird.

I3. Verfahren nach einem oder mehreren der Ansprüche I bis I2, **dadurch gekennzeichnet** , daß die Speichervorrichtung an eine schrittweise arbeitende Quertransportvorrichtung eines Kabelkonfektionierautomaten angekoppelt wird und mindestens ein Transportband der Speichervorrichtung von Antriebsmitteln der Quertransportvorrichtung angetrieben wird und daß die Leitungen von der Quertransportvorrichtung unmittelbar zwischen die Transportbänder der Speichervorrichtung eingegeben werden, während die Leitungen noch von der Quertransportvorrichtung gehalten werden.

I4. Verfahren nach einem oder mehreren der Ansprüche I bis I3, **dadurch gekennzeichnet** , daß die Speichervorrichtung an eine Weiterverarbeitungsvorrichtung, z. B. eine Gehäusebestückungsvorrichtung, angekoppelt wird und mindestens ein Transportband der Speichervorrichtung von Antriebsmitteln der Weiterverarbeitungsvorrichtung angetrieben wird.

I5. Vorrichtung zum Speichern und Lagern von elektrischen, insbesondere zumindest an einem Ende mit einem elektrischen Verbinder bestückten Leitungen, die im Quertransport aus einem Kabelkonfektionierautomaten befördert werden, **gekennzeichnet durch** zwei endlos in an sich bekannter Weise über Rollen in einer vertikalen Ebene geführte Transportbänder (2,3), wovon das Transportband (3) senkrecht fluchtend unter dem Transportband (2) angeordnet ist und der untere Trum - (4) des Transportbandes (2) den oberen Trum (5) des Transportbandes (3) berührt.

16. Vorrichtung nach Anspruch l5, **dadurch gekennzeichnet,** daß die Transportbänder (2,3) mit mindestens einer Klammervorrichtung (6) zusammengehalten werden.

l7. Vorrichtung nach einem oder mehreren der Ansprüche l5 bis l6, **dadurch gekennzeich net,** daß die Transportriemen (2) und (3) in Pfeilrichtung (7,8) antreibbar ausgebildet sind.

l8. Vorrichtung nach einem oder mehreren der Ansprüche l5 bis l7, **dadurch gekennzeichnet,** daß ein Transportband (2) antreibbar ausgebildet ist und das jeweils andere Transportband lediglich vom berührenden Trum des angetriebenen Transportbandes mitgenommen wird.

l9. Vorrichtung nach einem oder mehreren der Ansprüche l5 bis l8, **dadurch gekennzeichnet,** daß die Antriebsmittel für die Transportbänder - (2,3) aus Kupplungselementen, z. B. Zahnrädern oder Riementrieben, bestehen, die an der Quertransportvorrichtung (9) eines Kabelkonfektionierautomaten oder einer Weiterverarbeitungsvorrichtung, z. B. einer Gehäusebestückungsvorrichtung, angeordnet sind.